# EUROPEAN PATENT SPECIFICATION

(11) **EP 3 289 128 B1**
(45) Date of publication and mention of the grant of the patent: **29.05.2019**
(21) Application number: 15744653.5
(22) Date of filing: 28.04.2015
(51) Int. Cl.: D02G 3/44, D06M 11/83, D06M 15/564, D06M 101/34, D06Q 1/10, D06Q 1/12, D06M 23/08, D06P 1/00, G02B 5/128, D02G 3/18, D07B 1/14

(54) **RETROREFLECTIVE, ELONGATED, FILAMENTOUS PRODUCT, PROCESS FOR MAKING THE SAME, USES THEREOF AND PRODUCTS MADE THEREFROM**
RETROREFLEKTIERENDES, LÄNGLICHES, FILAMENTÖSES PRODUKT, VERFAHREN ZUR HERSTELLUNG DAVON, VERWENDUNGEN DAVON UND DARAUS HERGESTELLTE PRODUKTE
PRODUIT FILAMENTEUX, ALLONGÉ, RÉTRO-RÉFLÉCHISSANT, PROCÉDÉ DE FABRICATION ASSOCIÉ, SES UTILISATIONS ET PRODUITS FABRIQUÉS À PARTIR D'UN TEL PRODUIT

(43) Date of publication of application: 07.03.2018
(73) Proprietor: C.R.Y. SAS, 26100 Romans-sur-Isère (FR); Massebeuf Textiles SAS, 07380 Pont de Labeaume (FR)
(72) Inventor: NOWAK, Pascal, F-07200 Mercuer (FR); BOUCHET, Anne, F-26000 Valence (FR); NIGRO, Bruno, I-37141 Verona (IT); BONVENTRE, Francesca, I-24060 Montello (IT)
(74) Representative: Thurgood, Alexander John
(86) International application number: PCT/IB2015/001049
(87) International publication number: WO 2016/174492

(56) References cited:
- WO-A1-2007/054457
- GB-A- 1 424 754
- US-A- 3 050 824
- DATABASE WPI Week 201332 Thomson Scientific, London, GB; AN 2013-H08463 XP002751028, -& JP 2013 085995 A (KOMATSU PROCESS KK) 13 May 2013 (2013-05-13)

## Description

The present invention relates to retroreflective technology for use in, on or with textile materials, and more particularly to yarns which have retroreflective properties.

One common technique for providing retroreflective properties in a textile material, e.g. a fabric or garment, involves, for example, printing on, or applying high refractive index microparticles, e.g. microspheres, to the textile. The glass beads generally partially embedded from 30% to 50% in a polymer layer. If these microspheres, or microbeads, have their embedded halves coated with metallic material, for example, aluminium, their ability to reflect light increases dramatically, in the region of between twenty to fifty-fold. When incident light hits the beads, it can enter the bead via an uncovered area, and then either pass through the bead or hit a metallic coated area from within the inside of the bead, to be reflected back out again. This backscattering, or reflectance, is generally distributed under any possible scattering angle. However this reflection can be oriented quite precisely into the direction of the incoming light provided an accurate choice of the refractive index of the microspheres. This particular ability to return light in the direction of an incoming beam, called retroreflection, is currently used in the high visibility clothing industry, either for safety of workers during the night or simply to provide fashionable effects.

The spheres or substantially spherical beads, are generally made of glass, or some other transparent or translucent material, e.g. aluminosilicates, borosilicates, metal oxides, crystalline polymers, that have a refractive index comprised between about 1.3 and about 2.4. The best choice of refractive index varies according to the envisaged usage context, and is ruled by the physics of light scattering through small particles of arbitrary shape. These laws are known to the skilled person and conveniently described in textbooks, for example, "Absorption and Scattering by Small Particles", March 23, 1998, C. F. Bohren, D. R. Huffman, WILEY-VCH. One method of obtaining such retroreflective spheres is to coat them with a metal or mirror-forming substance, e.g through the use of chemicals, electrochemistry, or chemical (CVD) or physical vapour deposition (PVD). These techniques are known to the skilled person per se. European Patent EP1468619 relates to a retroreflective high visibility printed product on a substrate including fabrics as well as other textile substrates for use in personal articles such as attractive high visibility clothing, sportswear, footwear and accessories, characterized by using a continuous, flexible process of selective demetallisation of an etchable aluminium layer for obtaining printed images. The method involves the application of a hemispherical mirror layer on microspheres via physical vapour deposition and subsequently selectively exposed to a demetallising chemical solution. The microspheres are applied to the textile material via a printing process involving a carrier transfer web material. Such a system is both relatively complex, in that it requires the printed pattern to be designed beforehand and applied to the carrier transfer web, and additionally is only feasible for application to a pre-manufactured transformed and pre-prepared textile surface, such as a fabric, weft, web, etc, as the transfer method requires heat activation to release the microspheres from the carrier transfer web.

The above described solution is inappropriate when attempting to manufacture a yarn or thread that has the required retroreflective properties. Attempts to achieve such properties have, for example, been made in US4697407 and WO2007054457.

In US patent US4697407, a thread-like continuous retroreflective fibre and method of making the same is disclosed, comprising the steps of laminating a thin film of retroreflective material to a supporting polyester film, and then slitting the laminate to form narrow strips of retroreflective material having sufficient strength to be combined with other fibres to form a composite yarn having retroreflective characteristics, which composite yarn may then be woven, knitted, or spun to provide a fabric having retroreflective characteristics. Objectively, this is yet again a fairly complicated process involving assembly of two laminated layers, one of which comprises the retroreflective beads or microspheres, and then slitting and re-assembling the slitted material as a twisted yarn or filament, with the result that said filament is only retroreflective to the extent that the microspheres face outwards and can receive incident light at an angle permitting adequate reflection. Additionally, the filament produced by the method described in this patent may be difficult to weave into textile products.

In US patent application WO2007054457, a retroreflective metal wire product is described having a first coating covering the metallic wires, wherein the retroreflective beads are partly embedded, and a protective coating covering said beads and first coating. The metal wire product can be made from a metallic strand or wire, the metal being stainless steel, or low carbon steel or high carbon steel. The retroreflective metal wire product can be used for diverse appliances such as spoke wire, signalisation means, and bookbinding wire. According to a first embodiment, the wire product comprises a core wire, with twisted multifilament wires extending coaxially around the core. This assembly is then coated with polyethylene terephthalate (PET), into which retroreflective beads of an average diameter of 90 micrometers are partly embedded - the depth of particle embedding in the PET layer is comprised between about 25% to 50% of the diameter of the beads, although some are embedded more deeply. The embedded beads and metal strands are then coated with a polyacrylic aerosol that sets to leave a top coating on the wire product.

In a second embodiment of WO2007054457, the wire core was extrusion coated with a clear PET as the first coating layer. Silver coated beads, obtained by full metallization, were stuck into the warm polymer coating using a fluidised bed. The silver areas that were not covered in polymer coating were dissolved by treatment with hydrogen peroxide acetic acid mixture. Subsequently, a polyethylene passivation layer was dip coated onto the wire product. It should be noted that creating reflective beads by full metallization, followed by partial demetallisation, is a very lengthy, and complex process.

As can be seen from the above examples of the prior art, previous attempts to obtain retroreflective filament, threads or yarns, have required aggressive or extreme pre- or posttreatments of the yarn, thread or multifilament product in order to ensure that the retroreflective beads are oriented in the correct way to allow for retroreflection to occur. Indeed, the solution of the abovementioned WO2007054457 requires that fully coated beads be used which are then post-treated with aggressive acidic conditions to remove the unembedded silver-coated areas from the surface of the beads. In the case where only partly mirrored, or partially silver-coated beads are used, their application to the first polymer layer is made by fluidised bed techniques. Such techniques do not guarantee correct orientation of the beads.

An attempt at addressing randomization of bead orientation was made in US2004/0180199, where a bulk quantity of hemispherically coated microbeads was first obtained by vacuum metallization. In a separate step, the metallized microbeads were melt-spun with a synthetic fibre resin core, and uniform alignment of the beads before they set was obtained through application of an electric field to the microspheres. It should, however, be noted that even uniform orientation does not appear to be considered efficient enough for the textile industry, as any weaving process would necessarily randomize the global orientation of the beads on the yarn.

Orientational randomisation is a major problem when using pre-prepared hemispherically metallised microbeads because randomisation of bead hemispheres leads to dramatic loss in retroreflection. It can be shown empirically that randomisation of metallised hemispheres leads to a loss of retroreflectance of 70 - 80%. A theoretical calculation, merging a well-known orientational statistical mechanics approach to liquid crystals, "The Molecular Dynamic of Liquid Crystals", Cap.3, G.R.Luckhurst C.A. Veracini, Proceeding of the Nato Advance Stud. Institute, with the knowledge of the optical path in a sphere of optimal refractive index, i.e. 1,91-1,93, leads to the same result. The other major drawback of pre-metallized beads is surface heterogeneity. The bimodal nature of the bead surface leads to adhesion failures unless the coating in which the microbeads are embedded is optimized for both the aluminised and the glass-like halves.

Another disadvantage of the known web transfer carrier material process described and known from the prior art above is that of residues from the web carrier material being transferred over during detachment of the hemi-metallised beads. This coupled with the beads' bimodal nature, reduces bead fluidity in the bead application reservoir and transport apparatus, and has a negative influence on the ability to carry out continuous all-in-one processing.

US 3,050,824 A discloses a reflective thread for use in a garment. It comprises reflecting glass spheres or beads embedded or coated with an adhesive and protected from wear by a transparent coating,

JP2013085995 A discloses a retroreflective multilayer coated material comprising a retroreflective coating resin film comprising a reflector and a layer of retroreflecting glass beads coated on the surface. A part of glass beads is partially exposed to surface of the coating film. A wire cable is mentioned as example of material and claimed.

### SUMMARY OF THE INVENTION

In view of the disadvantages, as illustrated above, of the known prior art solutions, the present invention provides, at the very least, an alternative solution, which additionally brings a number of surprising and unexpected benefits as will be outlined hereafter. Accordingly, the present invention provides a product, methods for its manufacture, uses thereof and products made therefrom.

Accordingly, the applicants have found that the problems of the prior art can be solved, and numerous advantages obtained in so doing, by providing a retroreflective, elongated, filamentous product, comprising :
a core of non-metallic filamentous material;
a first polymer matrix layer comprising a polymer resin, located around an outer peripheral surface of, and penetrating into, the core of non-metallic filamentous material;
a reflective material located on an outer peripheral surface of said first polymer matrix layer;
a second polymer matrix layer comprising a polymer resin, forming a primer layer on top of said reflective material; and
a plurality of refractive microparticles distributed in said second polymer matrix primer layer, wherein said plurality of refractive microparticles is partially embedded in said second polymer matrix primer layer.

Some of the main advantages of the product according to the invention are that:
it can be made by an all-in-one continuous process, without any intermediate discontinuous steps, unlike the prior art products that require multiple, parallel, intermediate and discontinuous steps;
the product according to the invention can use standard unmirrored or uncoated glass microbeads as refractive microparticles available generally on the market, thereby totally avoiding the issues and disadvantages of acid etch removal of mirrored surfaces;
despite the absence of a vacuum deposited metal coating on the microparticles, the product according to the invention displays full rear reflectance with ideal radial orientation and, as a consequence, the highest retroreflective requirements compatible with the cylindrical geometry of the elongated, filamentous product;
it exhibits flexibility and mechanical toughness due to encapsulation of a rear reflective coating between several polymer layers, avoiding any issues of adhesion failures between a metal surface and a glass-like surface of the microparticles, even under high friction and high speed processing, such as weaving or knitting;
the reflective material is organised in a manner akin to a crust of small particles in close arrangement with a thickness which has no impact on any other dimension of the product, e.g. the thickness of any refractive microparticles, or the diameter of the core filamentous material.

### BRIEF DESCRIPTION OF THE FIGURES

Figure 1 is a schematic cross-sectional representation of a retroreflective filamentous product according to one embodiment of the present invention;
Figure 2 is a schematic cross-sectional representation of a second embodiment of the retroreflective filamentous product according to the present invention;
Figure 3 is a schematic block diagram of a process for manufacturing a product according to the invention and corresponding to the product illustrated in Figure 1;
Figure 4 is a schematic block diagram of a process for manufacturing a product according to the invention and corresponding to the product illustrated in Figure 2;
Figure 5 is a schematic magnified view of the way in which the reflective material particles can be arranged in three different ways (5a, 5b, 5c) on microparticles according to the products and processes of the present invention;
Figure 6 is another schematic view of the arrangement 5b of Figure 5 illustrating an even more magnified view of how the reflective material particles are bound to the surface of the microparticles in a particular reflective material arrangement.

Where features of the present invention are referred to as a range of possible values, and these ranges indicate endpoints of the range, said endpoints are considered to be specifically included in said range.

In one embodiment, the applicants have found that the problems of the prior art can be solved, and numerous advantages obtained in so doing, by providing a retroreflective, elongated, filamentous product, comprising :
a core of non-metallic filamentous material;
a first polymer matrix layer comprising a polymer resin, located around an outer peripheral surface of, and penetrating into, the core of non-metallic filamentous material;
a reflective material located on an outer peripheral surface of said first polymer matrix layer;
a second polymer matrix layer comprising a polymer resin, forming a primer layer on top of said reflective material; and
a plurality of refractive microparticles distributed in said second polymer matrix primer layer, wherein said plurality of refractive microparticles is partially embedded in said second polymer matrix primer layer.

The retroreflective, elongated, filamentous product according to the invention is based on a core non-metallic filamentous material. Such materials are well known per se, and can be found in many suitable forms, among which core materials which chosen from the group consisting of yarn, thread, and fibre. Insofar as the actual material of the core made of, or made into, threads, fibres or yarn is concerned, the at least one non-metallic filamentous material is advantageously selected from the group consisting of natural non-metallic or synthetic non-metallic materials.

Suitable non-metallic filamentous material for the core is advantageously chosen from the group consisting of polyamides, polyesters, polyethylenes, liquid crystal polymers, polyarylates, glass fibres, aramide fibres, and combinations thereof. In particular, such materials, when in the form of threads or yarns, can have various linear mass densities, commonly expressed as a unit measure known as Tex. Preferred weights for the core material when presented as a thread or yarn are from between about 10 dTex to about 2500 dTex, most preferably from between 33 dTex to 440 dTex. Yarns and threads of about 120 dTex have been found to be particularly suitable for use in producing a product according to the present invention.

As mentioned above, the first polymer matrix layer impregnates both the outer peripheral surface of the core material, and the core materials itself, effectively covering the latter substantially completely or totally. The first polymer matrix is preferably chosen from the group of polymers consisting of waterborne acrylic emulsions, polyurethane dispersions, solvent-borne polyurethanes, and combinations thereof.

The first polymer matrix layer preferably has an average thickness which is correlated to the size of refractive microparticles used. When refractive microparticle sizes of between 35 to 63 microns are used, as illustrated in the present invention, accordingly, the average thickness of the first polymer matrix layer is from about 10 micrometers to about 40 micrometers. It has been found particularly advantageous to be able to control the thickness of the first polymer layer so that it is approximately 20 micometers thick. However, should larger or smaller size refractive particles be used, the thickness of the first polymer matrix layer would be adapted in a corresponding manner.

As mentioned above, a plurality of refractive microparticles is distributed in said second polymer matrix primer layer, wherein said plurality of refractive microparticles is partially embedded in said second polymer matrix primer layer. As light must be able to pass through the refractive microparticles, in order for incident light to be reflected by the reflective material and then pass back out through the microparticle towards the direction of the incoming light, these refractive microparticles must have a suitable refractive index. Accordingly, the refractive index of such refractive microparticles is generally from about 1.3 to about 2.4, preferably sharply centred around 1.92, or 2.2 respectively, depending on whether the microparticles will be in direct contact with the air, or completely embedded in a third polymer layer.

The refractive microparticles generally have an average particle thickness of from about 30 micrometers to about 120 micrometers. For the suitable yarn linear mass density of 120 dTex indicated above it has been found advantageous to use a diameter distribution from 30 micrometers to 50 micrometers.

It should be noted that the generally hydrophobic nature of glass microbeads, in particular, makes it particularly difficult to get these beads to be correctly distributed in, or adhere to, the second polymer matrix primer layer.

As mentioned above, the refractive microparticles are only partially embedded in the second polymer matrix primer layer. These refractive microparticles can be embedded at different depths, according to the appropriate choice of materials used for the second polymer matrix primer layer, refractive microparticles, and processing steps operated according to the present invention, but generally, the refractive microparticles are partially embedded in the second polymer matrix primer layer up to a depth of between one quarter to one half of the average particle thickness of said microparticles. As will be understood by the skilled person, in this configuration, part of the microparticle surfaces protrudes or projects beyond the outer surface of the second polymer matrix to form what is known in the present application as an "open-lens" product. It has been found that particularly advantageous results and properties can be obtained for the product of the invention when the plurality of refractive microparticles is partially embedded in the second polymer matrix primer layer as a monolayer of refractive microparticles.

In some embodiments of the invention, it may also be desirable for the refractive microparticles to be partially embedded in both the first polymer matrix layer and the second polymer matrix primer layer. The depths of embedding indicated above would also be applicable to such a configuration, i.e. partial embedding of the refractive particles in the combined polymer matrix layers of between one quarter to one half of the average particle thickness of said microparticles. The second polymer matrix primer layer is a polymer preferably selected from the group consisting of waterborne acrylic emulsions, polyurethane dispersions, solvent-borne polyurethanes, and combinations thereof. These polymers can be conveniently formulated for use in the present invention as will become apparent in the detailed examples.

In another advantageous embodiment, the second polymer matrix primer layer has a thickness of between about an eighth and a half of the average particle thickness of said refractive microparticles.

The product according to the present invention contains a reflective material. In one embodiment, this reflective material is located on an outer peripheral surface of said first polymer matrix layer, and is sandwiched between a first polymer matrix layer and a second polymer matrix primer layer.

Insofar as the reflective material itself is concerned, there are many known suitable type of reflective materials, but in the present case, it has been found particularly advantageous to use reflective materials chosen from the group consisting of reflective metals, metal oxides, metal alloys, non-metal oxides, reflective polymers, mica, boron nitride, nacreous pigment flakes and combinations thereof, providing that they all provide a light reflecting surface.

Previous, known, reflective materials have often been, as described in the introduction, supplied as vapour deposited layers of metal, or reflective surface forming materials. In the present invention, due to the symmetry of the system and the all-in-one production process, which are implicit determined by the use of a narrow elongated filamentous product, e.g. a yarn, physical vapour deposition under vacuum is inapplicable, as will be readily understood by skilled person. In the present invention, the best results have been found when using reflective material which consists of discrete particles of reflective material.

Accordingly, in one embodiment of the invention, the reflective material is a particulate material selected from the group consisting of flakes, platelets, needles, spheres, discs, granules, pressed-shape flakes, cornflake -shaped flakes, silver dollar shaped flakes, and combinations thereof.

In one embodiment of the invention, the reflective material comprises vacuum metallized pigment platelets having an average thickness of from about 0.03 micrometers to about 0.1 micrometers and a specific surface area of from about 50 square micrometers to about 300 square micrometers.

When using particulate reflective material for the purposes of the present invention, it has been found by the applicants that particularly good results have been obtained when the reflective material is arranged in a particular manner on the outer peripheral surface of the first polymer matrix. Accordingly, superior results have been obtained when the reflective particles have been arranged in a manner chosen from the group consisting of tightly packed multiple layers, adjacently deposited collections, partially overlapping layers, of reflective material, and combinations thereof.

The arrangement wherein the reflective particles are chemically interconnected to form a continuous layer of partially overlapping regions is particularly preferred. In this case, the reflective particles can advantageously be chemically interconnected via a binding agent chosen from the group consisting of organosilanes and titanates, and combinations thereof.

The reflective particle layer can thus form a layer which has an average thickness of from about 0.05 micrometers to about 5 micrometers, and preferably an average thickness of about 0.2 micrometers.

In still yet another embodiment, the refractive microparticles are covered completely by a third, transparent or semi-opaque, polymer matrix layer. This type of product is referred to herein as a "closed lens" product because the micoparticles are completely covered, or closed, by polymer matrix.

In the "closed lens" configuration, it has been found advantageous for the refractive microparticles to have a refractive index of from about 2.1 to about 2.3, and for the third polymer matrix layer to have a refractive index of from about 1.3 to about 1.7.

The third polymer matrix layer can also be any suitable polymer that is capable of binding to both the refractive microparticles and the second polymer layer without causing said third layer or the beads to fall off the product as a whole when it is further processed, for example, transformed into a garment or other textile product. Accordingly, best results have been found when the third polymer matrix is chosen from the group of polymers consisting of hot-melt crosslinkable polyurethanes, solvent-borne or waterborne polyurethanes, acrylic emulsions, two-component curable silicone-based elastomers or the like, and combinations thereof. With regard to the two component curable silicone elastomer, these can be suitably chosen from those comprising at least one polyorganosiloxane, but preferably comprising a mixture of two polyorganosiloxanes. One of the components of this curable silicone system is a catalyst for the polymerisation reaction. Such mixtures are preferably liquid at room temperature before polymerisation occurs. The bicomponent mixture can be reticulated via a polyaddition reaction at a temperature comprised between about 150°C and 350°C for between about 3 to about 10 seconds. Preferably, such bicomponent curable silicone polymer systems are low viscosity, for example less than or equal to 20,000 mPa.s at 23°C and ambient pressure, with a most preferred viscosity of 2500 mPa.s, as mesured with a Brookfield viscosimeter on a number 2 spindle at 5 rpm. Such curable bicomponent silicone polymer systems are available commercially from Bluestar Silicones France, for example, under the reference Bluesil TCS 7513 A+B. This product is a liquid bicomponent system, in which component B is a catalyst enabling reticulation of the silicone via polyaddition at high temperature, at around 150°C.

According to yet another embodiment of the invention, the product has a linear mass density of between about 800 dtex and about 1300 dtex, and preferably between about 900 dtex to about 1200 dtex. It was surprisingly found possible to produce yarns and threads of this relatively high linear mass density that could also be transformed into suitable articles, for example, via weaving or knitting, and from there into garments which integrated the product according to the invention to provide one or more retroreflective areas, without substantially losing their retroreflective properties, as illustrated in the examples hereafter.

In still yet another embodiment of the present invention, there is provided a process for the manufacture of a retroreflective, elongated, filamentous product according to the present invention comprising the steps of:
providing a core material of non-metallic filamentous material;
impregnating an outer peripheral surface of the core of non-metallic filamentous material with a first polymer matrix layer comprising a polymer resin such that said first polymer matrix layer surrounds, and penetrates into, said core;
locating a reflective material around an outer peripheral surface of first polymer matrix layer;
locating a second polymer matrix layer comprising a polymer resin, on top of said reflective material, to form a primer layer; and
distributing a plurality of refractive microparticles in said second polymer matrix primer layer, wherein said plurality of refractive microparticles is partially embedded in said second polymer matrix primer layer.

According to one embodiment of the inventive process, the first polymer matrix layer is crosslinked such that during full solvent evaporation it is in a thermoplastic state, and then under curing conditions undergoes a thermoset conversion.

Preferably, location of said reflective material occurs via depositing said reflective material on the outer surface of the first polymer matrix coating, preferably by washing or impregnating said outer peripheral surface of said first polymer matrix with a carrier liquid containing reflective material dispersed or dissolved therein, and optionally one or more binding agents or binding facilitators, or alternatively an evaporable vehicle allowing for post-material evaporation thereof.

With regard to the location step of the reflective material, advantageous results have been obtained when said reflective material is located around the peripheral surface of said first polymer matrix layer by applying an aqueous dispersion of reflective material to said peripheral surface of said first polymer matrix layer.

Advantageously, one or more binding agents is co-applied with the aqueous dispersion of reflective material to facilitate location thereof on said first polymer matrix.

According to another embodiment of the process according to the present invention, a second polymer matrix primer layer is applied to said reflective material. This leads to an encapsulated, or covered, layer of reflective material, caught in a sandwich between a first polymer matrix layer and a second polymer matrix primer layer.

The process according to the present invention also provides an embodiment wherein the reflective material is arranged in a particular manner, on the outer peripheral surface of the first polymer matrix. Accordingly, superior results have been obtained when the reflective particles have been arranged in a manner chosen from the group consisting of tightly packed multiple layers, adjacently deposited collections, partially overlapping layers, of reflective material, and combinations thereof. The arrangement wherein the reflective particles are chemically interconnected to form a continuous layer of partially overlapping regions is particularly preferred. These reflective particles can be chemically interconnected via a binding agent chosen from the group consisting of organosilanes and titanates, and combinations thereof. This can be achieved most advantageously by washing the outer peripheral surface of said first polymer matrix layer with a carrier liquid containing reflective material dispersed therein, and optionally one or more binding agents or binding facilitators, or alternatively an evaporable vehicle allowing for post-material evaporation thereof.

In one embodiment, the plurality of refractive microparticles is embedded into said second polymer matrix primer layer, and optionally advantageously said first polymer matrix layer, by application of heat and pressure when said first polymer matrix layer and said second polymer matrix primer layer are in a thermoplastic state.

Various methods and devices can be used to apply heat and pressure, for example:
- the filamentous product is passed through two rollers, located one above the other, of predetermined dimensions along the axis of travel of the product. The rollers are preferably made of a soft material, for example, from about 30 to about 70 shore, and a pressure of 20 cN applied via said roller system;
- alternatively, the filamentous product is passed through two casters at different heights along the axis of travel and having a predetermined shape, such as a groove. For a yarn product, one could use a half yarn profile for the casters, with each caster having a half-yarn profile shape. The filamentous product is first passed for example underneath the first caster, located at a lower position than the second caster, and then up over the top of the second caster. This configuration can be reversed, and the product first passed over the top of the first caster located at a higher position than the second caster, and then down to and underneath the second caster. The pressure applied is determined by the tension in the filamentous product, for example, 50cN.

However, in one advantageous embodiment, it has been found beneficial for pressure to be applied by passing said first and second polymer matrix layers having sandwiched the reflective material and bearing the refractive microparticles through a gapped roller system. A gapped roller system as used in the present invention is described in more detail hereinafter with reference to the provided examples.

At the same time as, or just before, or just after, pressure is applied, heat can also advantageously be applied. For example, one preferred way of applying heat and pressure is to apply heat to the filamentous product, thereby softening it, and causing it to become thermoplastic, and then apply pressure to cause said refractive microparticles to be partially embedded in said second polymer matrix layer, and optionally advantageously in said first polymermatrixlayer, preferably as a monolayer of refractive microparticles. Heat and pressure can be applied simultaneously, although it has been proven beneficial to first apply heat, then apply pressure, for example, via the gapped roller system, then re-apply heat. This has been found to optimally partially embed the refractive microparticles within the second polymer matrix primer layer, and also optionally within the first polymer matrix layer, to provide an "open lens" configured product.

In yet another embodiment of the invention, the applicants provide a use of a retroreflective, elongated, filamentous product as described or exemplified herein, or as obtained by a process described or exemplified herein, in the manufacture of a textile product. Such a textile product can be a knitted, woven or non-woven textile product, for example, a fabric.

In still yet another embodiment, the invention provides a garment integrating a retroreflective, elongated, filamentous product as described or exemplified herein, or as obtained according to the process described or exemplified herein. Suitable garments that integrate a product according to the invention can be generally retroreflective, e.g. if the entire garment is made from the product according to the invention, or can have defined areas which are retroreflective, e.g. for facilitating recognition of a general outline, shape, or member of the body by the eye in the dark or low-light conditions, especially when light is projected thereon. An example of such a garment might be a running vest, or a security jacket, or shoes, socks, and the like, containing retroreflective areas made from or integrating, the product according to the present invention. Other objects can also be made retroreflective or partially retroreflective by application or integration of the product according to the present invention, for example, road or house signs, warning or safety bands, batons, and all manner of other objects for which it is desirable that they have retroreflective characteristics and in which the product according to the invention can be integrated.

### DETAILED DESCRIPTION OF THE INVENTION

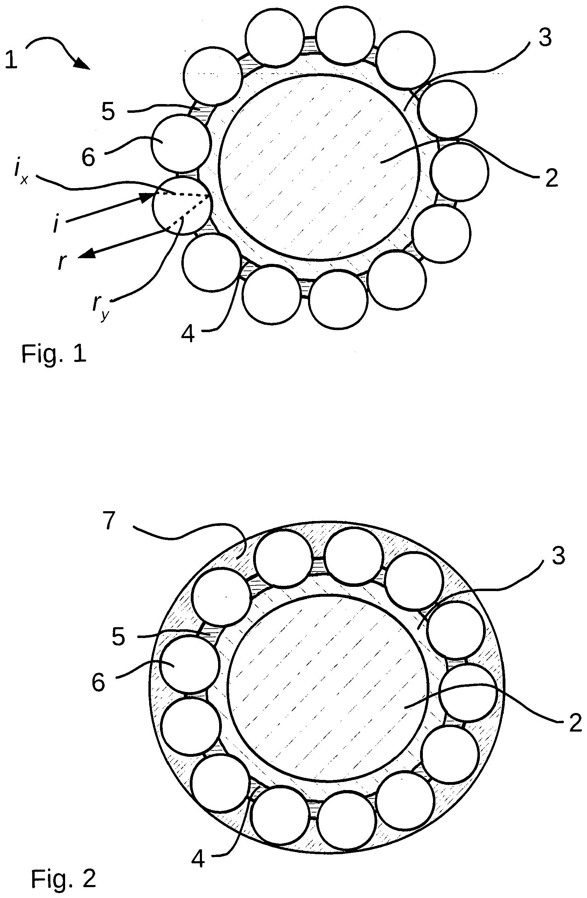

According to one embodiment, a product according to the present invention is represented schematically in Fig.1 in cross-section by the general reference number (1). A non-metallic, filamentous core material (2), is surrounded by a first polymer matrix layer (3). A plurality of refractive microparticles (6) is distributed in a second polymer matrix primer layer (5), wherein said plurality of refractive microparticles (6) is partially embedded in said second polymer matrix primer layer (5) and also partly within said first polymer matrix layer (3). The second polymer matrix primer layer serves to facilitate adhesion of the refractive microparticles to the core yarn and first polymer matrix layer. Preferably, the refractive microparticles are embedded approximately from one-fourth to one-half of the particle thickness, in the first and second polymer matrix layers (5). A layer of reflective material (4) is located between said first polymer matrix layer (3) and said second polymer matrix primer layer (5), in this example, on the outer peripheral surface of said first polymer matrix layer and on top of the layer of reflective material. This type of product is designated "open-lens" because the refractive microparticles (6) are only partially embedded in the second polymer matrix primer layer (5), i.e. not covered by said second polymer matrix primer layer material, leaving a part of their outer surface exposed to incoming light rays, and allowing for light to enter the refractive microparticles, as illustrated by the incident light path (*i*), and refracted incident light path (*iₓ*) and be reflected off the layer of reflective material (4) behind the microparticle, travelling back through the latter (*r_{y}*) and then exiting the refractive microparticles via a different path r, substantially parallel to *i*, once the appropriate refractive index for the microparticle has been chosen.

Figure 2 illustrates a schematic cross-section of a closed- product according to the invention. The product is called "closed-lens" because the refractive microparticles are coated in a third polymer matrix layer (7), that causes said refractive refractive microparticles (6) to be completely surrounded by a combination of both said third polymer matrix layer (7) substantially on the top, and said second polymer matrix primer layer, substantially underneath, said refractive microparticles (6). The third polymer matrix layer is made of transparent or semi-opaque polymer resin, to allow light to pass through it. Such a "closed-lens" product still provides for retroreflection in a similar manner to that described above in Figure 1 for the open , but the amount of light that is retroreflected is naturally lower due to the presence of the third polymer matrix layer (7), which attenuates the amount of light both going in, and coming back out of, the refractive microparticles. Some of the advantages of a "closed lens" product are lower frictional resistance when processing the finished yarn, reduction in the potential loss of refractive microparticles due to abrasion caused by handling, knitting and weaving of the yarn, and improved smoother feel of the end product. Closed-lens products are advantageous whenever the surface of the filamentous product, e.g. a yarn, needs to be heavily functionalized, such as for significant improvement of abrasion resistance, to impart hydrophobicity, to increase resistance to weathering agents, or simply to merge retroreflective properties with other aesthetic or tactile effects.

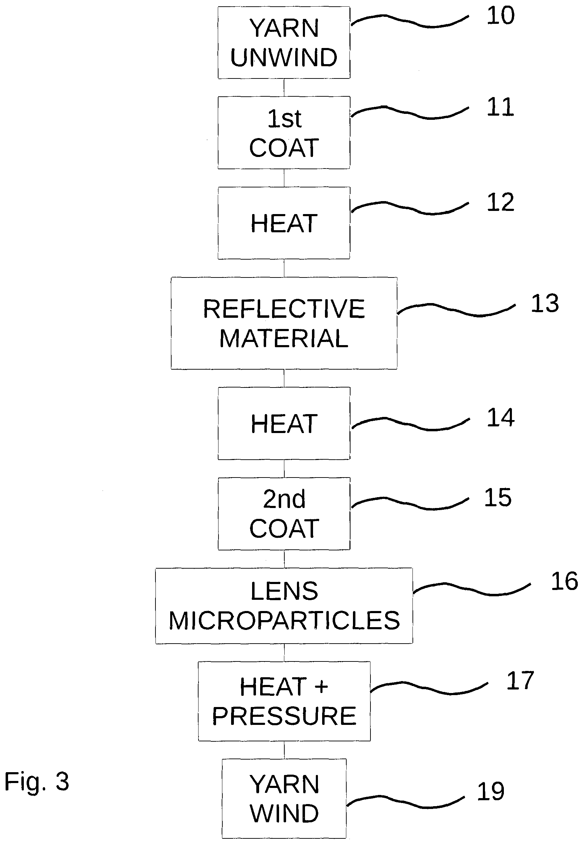

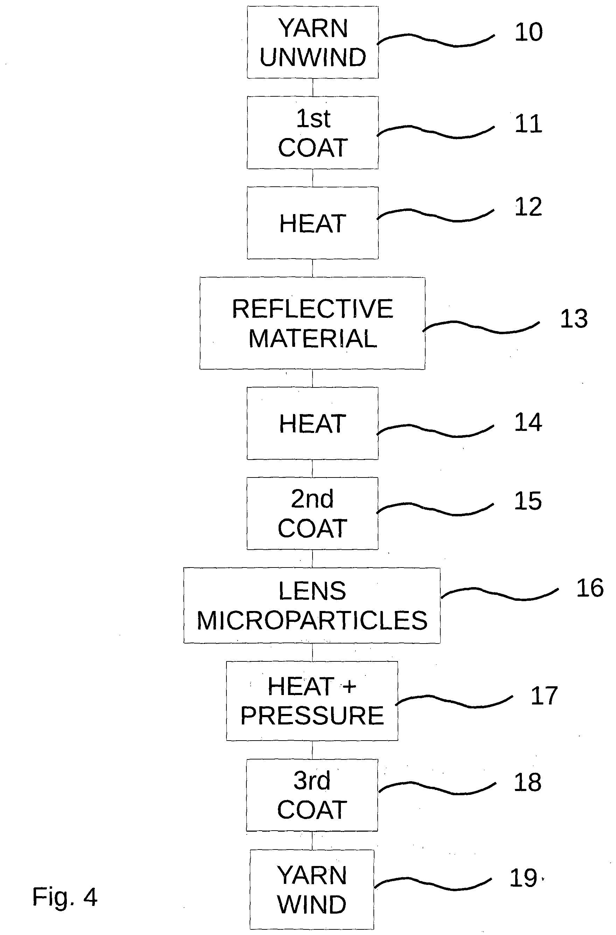

A process suitable for the manufacture of the product according to the present invention is described hereafter. As will be seen from the description, this process can be carried out in a continuous manner, unlike the known processes of the prior art for producing retroreflective materials. The process embodiments according to the present invention are illustrated schematically by the block diagrams of Figures 3 and 4.
A) A core yarn, for example, multifilament, monofilament, fibre threads, hybrid thread or yarn, or similar derivative, with a linear mass density of from about 10 dTex to about 2500 dTex, is introduced into the processing apparatus via a preliminary unwinding spool at constant tension. The yarn is impregnated (11) with a first polymer matrix in a corresponding polymer bath. The viscosity of the polymer matrix formulation in the bath is from about 200 to about 10000 mPa.s. The core yarn runs through a convoluted yarn path to ensure that the yarn is sufficiently impregnated by the first polymer matrix formulation, said first polymer matrix not only surrounding the outer peripheral surface of the yarn, but also penetrating into the yarn. The polymer matrix layer that is deposited on the outer peripheral surface of the core is calibrated by passing the yarn through a groove or series of grooves engraved in a roller in the direction of travel of the yarn, with a counter roller exerting pressure on the grooved roller to remove any excess polymer coating. The impregnated yarn then passes into an oven (12), preferably an infrared oven, where evaporation of the solvent and reticulation or crosslinking of the polymer matrix is activated to start drying the polymer matrix, while keeping it in a thermoplastic state. Temperature and baking times are functional so as to keep the polymer in a thermoplastic state and can range from a few seconds to a few minutes, with temperatures of from about 80°C to about 160°C, and from 80°C to 110°C, being preferred. The first polymer matrix layer (3) provides the bulk of the whole coating since all subsequent layers will be laid on it. This first polymer matrix layer aids in imparting the required mechanical properties to the final product and guarantees proper adhesion to the non-metallic core. In a preferred embodiment of the invention the yarn is then coated with an optional aqueous dispersion of a polymer formulation which is partially dried before subsequent steps in order to recover filming behaviour and some tackiness. It is preferred that polymer matrix layer (3) still be in a thermoplastic state at this stage, and not crosslinked before all subsequent steps are performed. In order to achieve this, and according to a preferred embodiment, blocked crosslinkers can be provided in the formulation, or alternatively, a polymer formulation can be chosen that only crosslinks at a certain higher temperature than that at which the first oven is being operated, or which only crosslinks after a longer baking time. Among the various possibilities for blocked crosslinking species, melamines, blocked isocyanates, or self-crosslinkable acrylic emulsions are preferred. Alternatively, a faster curable coating could also be used, adapting instead the drying time and oven temperatures so that these are not sufficiently long or high enough to initiate crosslinking. Examples of such suitable polymers would be polyaziridines, free isocyanates, and oxazoline-based crosslinkers.

When the thread leaves the first oven (12), it has a first polymer matrix layer. The yarn is then impregnated (13) once again in a another bath, this time containing an aqueous dispersion of reflective material such as aluminium particles at a weight content of up to 40% by weight, and preferably between 0.5% and 10% by weight, of the formulation, the effective weight content being dependent on the reflective materials shape factor and bulk density, and following the same application system as described hereinbefore with regard to the first polymer matrix layer. In order to increase cohesion of the reflective material to the coated yarn, a small quantity, less than 5%, preferably less than 1%, of bonding agent can be added. Such bonding agents are often polymerizable agents, such as reactive crosslinkable waterborne polymers or active adhesion promoters capable of self-polymerization and adhesion to the aluminium flakes. The desired viscosity for the formulation can be obtained by adding a thickener to the bath, if required or desirable. The coated wet yarn containing the reflective particles is now passed through an oven (14), for example an infrared oven, so as to evaporate the water in the coating and provide a dried layer. As the reflective material is preferably highly diluted, evaporation of water in the formulation leads to a fine, preferably submicron, layer of reflective material arranged in a particular way on the outer peripheral surface of the core. Uniform arrangement of such a reflective platelet array is one of the factors that determines the optical reflection properties of the finished product. Orientation effects have been quantified in detail in a National Institute of Standard and Technology (NIST) article entitled "Effect of Aluminium Flakes orientation on coating appearance", L.P. Sung et al., Journal of Coatings Technology, Volume 74, No. 932, pp. 55-63 (2002).

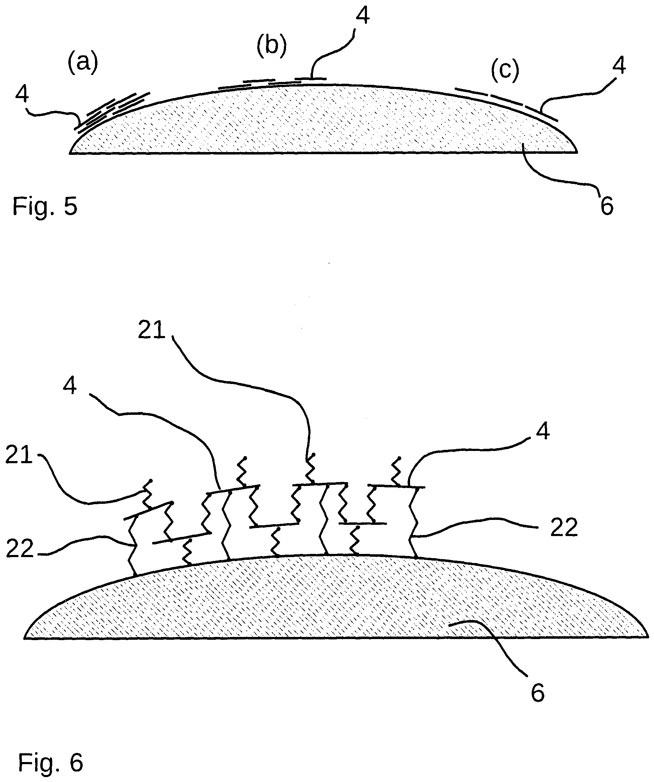

Figure 5 shows in a schematic illustrative magnified view, three possible uniformly oriented arrangements around a curved surface:
a) tightly packed multi-layering;
b) partial overlapping;
c) adjacent deposition.

Switching among the various arrangements (a), (b) and (c) is easily obtained by modulating platelet concentration and adequate agitation of the water dispersion. The drying of the wet, reflective material-containing deposit removes water, performing a radial shrinkage of the coating and leaving the desired platelet arrangement around, and on the surface of, the first polymer matrix.

In a preferred embodiment, as illustrated in Figure 6, the reflective material is configured in the adjacent deposition arrangement of the aluminium flakes (4) with local partial overlap. This arrangement offers the best performance in terms of flexibility and adhesion to the other layers of the product and also avoids having too many intercoating platelet-platelet contacts which can lead to cohesion failures. In order to obtain efficient linkage of a platelet with another partially overlapping platelet or with the contiguous other layers of the filamentous product, an efficient crosslink mechanism is desirable. This crosslink mechanism can provide for interconnecting platelets and at the same time functionalize the platelet surface to prepare it for subsequent layering. Figure 6 illustrates both types of interconnections (21) between flakes, and corresponding crosslinking (22) with other layers, in which the inter-platelet distances and functionals groups have been enlarged by several orders of magnitude for illustrative purposes only. Depending on the surface treatment already present on the platelets, this linkage is preferably based on crosslinking agents chosen from bi- or tri-functional silanes (R'-Si(OR)3, R'-SiX(OR)2), where R is (-CH3 or -CH2CH3), X is usually a short chain alkane, and R' can be any of the long tail functional groups that the market provides for in silane promoting agents, titanates, melamines, blocked or free isocyanates, epoxy emulsion functional groups or a mixture of thereof. A small percentage of long-chain polymer adhesive can also advantageously be introduced to impart elasticity. The weight ratio between bonding species and platelets is preferably less than 3/10, preferably less than 3/20, in order to keep the amount of any organic non-reflective species negligible and ensure flat alignment of the reflective inorganic platelets.

When the yarn now leaves the second oven (14), it passes through a second polymer bath, containing at least one polyurethane resin, applied in the same way as the other baths. This second polymer matrix constitutes the primer layer enables the refractive microparticles, in this example, microspheres or microbeads, to adhere to the yarn, without disturbing or interfering with the reflective performance of the reflective material in the layer below the microparticles. The primer layer also restores surface tackiness, which improves adhesion between moving coated yarn and microparticles when they are applied to the yarn.

Where a "closed-lens" is desired, i.e. with a coated or fully embedded, layer of refractive microparticles, this second polymer matrix primer layer creates the correct separation between the microparticles and the reflective material, and also creates a focussing layer enabling significant retroreflection. Thus, this second polymer matrix primer layer preferably has negligible thickness, for example, for an "open-lens" product, less than 1/10 of the microparticle radius for uncoated microparticle retroreflective products, and a consistent thickness of between 1/3 and 5/5 of the microparticle radius for coated microparticle retroreflective products.

In preferred embodiments this second polymer matrix primer layer is a waterborne coating in high dilution, with low dry content of polymer, preferably less than 20% by weight of wet formulation, ideally less than 10%. A combination of thickening agents and tackifiers can also be present in this formulation to adjust to an appropriate rheology and provide for satisfactory adhesion. Crosslinkers, adhesion promoters, levelling agents, defoamers can also be present in order to stabilize accordingly the waterborne coating.

An optional drying system within the manufacturing process, is provided to remove, partially if desired, the solvent, i.e. water, before application of the refractive microparticles in order to increase time-zero tackiness.

Refractive microparticles, preferably with a narrow particle size distribution profile, for example, in the range of from 20 microns to 70 microns, are loaded (16) onto the second polymer matrix primer layer before final crosslinking thereof. In a preferred embodiment, the microparticle distributor for the refractive microparticles comprises:
- a particle silo, preferably vibrating through the use of a pneumatic vibrator, as this helps to avoid blockage of the silo by the particles as they are prepared for distribution, the silo supplying an upper tray with particles;
- the tray can also vibrate, e.g. via an electromagnetic vibration system, the tray being located over the path of the yarn, and the vibrating tray then delivers microparticles via gravitational fall onto an upper part of the periphery of the yarn;
- a lower vibrating tray, also supplied with microparticles from the silo, located underneath the path of the yarn, whereby particles that have fallen and not struck the yarn can fall into the lower vibrating tray though which the yarn passes, and also help to maintain the level of microparticles in said lower tray. The particles in the lower vibrating tray allow microparticles to stick to the underside of the yarn. The lower tray is vibrated at a rate that maintains a constant level of microparticles in the tray, on average approximately 4800 vibrations per minute, and maintains a depth of microparticles in the tray of an approximate maximum of 1 mm, taking into account particles taken up the yarn and particles that have missed the yarn and fallen into the lower tray. The microparticle covered yarn is then partly dried (17) in an infrared oven for about 3 seconds to about 10 seconds at a temperature of from 100°C to 250°C, depending on the type of polymer and the core. The yarn is then passed through several free-wheeling gap rollers (17), which may or may not be heated. The lower polymer layers in the product start to melt under the effects of the heat applied, and the pull of the rollers causes the microparticles to be embedded in the second polymer matrix primer layer and at the same time deforms the reflective material layer and the first polymer matrix layer so that it adapts to the shape of the refractive microparticles. For example, according to the examples presented hereafter, the refractive microparticles are spherical beads, and the reflective material is deformed by the gap rollers pressing on the beads such that the reflective material assumes a rounded or curved shape. Where there are multiple adjacent particles, the reflective material layer is deformed correspondingly, similar to the representations in Figures 1 and 2. The final crosslinking step is carried out by putting the yarn through another baking step by returning the yarn to the oven from which it came prior to gap rolling, or by passing the yarn into yet another oven, whereby either is operated at between 100°C and 250°C, for from about 30 seconds to approximately one minute.

For an "open lens" retroreflective product, the yarn is then finished by passing it through a finishing system that applies finishing solution to the yarn. The finishing solution is dependent on the type of yarn that has been produced. Such yarn finishing products are known generally in the art.

If a thick protective coating is desired around the microparticles for a closed- product, i.e. a wholly covered microparticle retroreflective yarn product, as illustrated in Figure 2, a further coating is applied (18), cf. Figure 4. According to a process similar to those already described, the yarn enters a polymer reservoir and is passed through an applicator system as described in previous polymer application steps. It then goes through an oven where it is cured. This external layer can be solvent borne or waterborne polyurethane, acrylic emulsion, two-component silicone-based adhesives.

The yarn is then wound onto a spool (19), and can be stored as is or moved to other subsequent treatment areas.

The invention will now be described in more detail referring to the following examples, given as illustrations of various embodiments of the product, process for its manufacture and uses thereof, having regard to the Figures.

### EXAMPLE 1

A high tenacity PA66 multifilament yarn of 110dTex was drawn (10) at 20 m/min with a constant tension of 20cN into a first vessel containing a crosslinkable formulation (11) as indicated in Table 1.1, and then dried in an infrared oven (12) at no more than 110°C degrees for 20 seconds. The formulation of Table 1.1 was applied to the core yarn by total immersion of the yarn in a crosslinkable formulation bath, drawing it through the bath via a convoluted yarn path. This enabled the crosslinkable formulation to be applied between the filaments and onto the yarn surface, thereby improving adhesion and homogeneity of the formulation. The thus impregnated yarn was then passed over the surface of a motorized rotary roller, comprising one or more grooves provided in the surface of the roller, for example, by engraving, the grooves being aligned along the direction of travel of the yarn. The motorized rotary roller had a linear speed of 0.9 metres/min, and the groove or grooves a depth of 0.3 mm with an open angle of 60° measured from the groove's bottom. A second roller was pressed onto the motorized rotary roller at a pressure of 2 bar. This combination allows the thickness of the crosslinkable formulation to be calibrated around the yarn's surface. By virtue of the high activation temperature required for deblocking the crosslinker, and the short baking time, the fully dried coating was still in a mouldable thermoplastic state.

**Table 1.1: first matrix polymer layer formulation**

| **Name** | **Description/usage** | **Parts per hundred (phr)** |
|---|---|---|
| Edolan SN (Tanatex Chem. B.V.) | Polyurethane dispersion adhesive (solid content 40%) | 100 |
| Acrafix PCI (Tanatex Chem. B.V.) | Blocked Isocyanate Crosslinker | 2 |
| Gammaglycidoxypropyltrimethoxysilane | Trifunctional silane adhesion promoter | 1 |
| Acusol 820 (DOW Europe GmbH) | Pseudoplastic (HASE) acryl;ic copolymer thickener | 0.5 |
| BYK 093 (BYK Additives, ALTANA Group) | Defoamer | 0.4 |
| BYK 349 (BYK Additives, ALTANA Group) | Wetting agent | 0.2 |
| Ammonium hydroxide (as 5% NH solution in water) | pH modifying agent | QS to reach pH >7 |

The coated yarn then entered a second vessel containing reflective platelets (13), and in which the aqueous dispersion had been thickened with thickeners, along with a crosslinker and an adhesion promoting agent, see for example Table 1.2. The composition was such that after dehydration in an infrared oven (14) at 110°C for 30 seconds, an almost pure, continuous and nanometric sized metallic layer is formed around the coated yarn in a partial overlapping arrangement. For the purposes of this and the following examples, this layer is referred to as the reflective nanolayer. The platelets indicated in Table 1.2, i.e. Decomet 1050® (Schlenk), are obtained by physical vapour deposition and have two dimensions in the micrometric range, i.e. defining the surface dimesions, while the third dimension, i.e. thickness, is in the nanometric range, i.e. below 50 nm. The reflective platelets as deposited on the first polymer matrix layer are organised in partially overlapping arrangement around the coated core. The coating applicator system is the same as that described above. In this case the motorized rotary roller has a linear speed of 0.9 metres/min and the groove or grooves present a depth of 0.25 mm with an open angle of 60° measured from the groove's bottom. The low dilution of the platelets, their relatively small thickness, and the applicator system are all conducive to the fact that the weight contribution of the nanolayer in the final product, in terms of linear mass density, is negligible.

**Table 1.2: reflective dispersion formulation for reflective nanolayer**

| **Name** | **Description/usage** | **Parts per hundred (phr)** |
|---|---|---|
| Water (deionized) | Diluent | 100 |
| Decomet 1050 (Schlenk) | Vacuum metallized platelets | 6 |
| Silquest Wetlink 78 (Momentive Performance Materials Inc.) prediluted 1:1 in deionized water | Water solution of hydrolized polymerizable bifunctional silane as adhesion promoter and linker | 0.4 |
| Acusol 820 (Dow Europe GmbH) | Pseudoplastic (HASE) acrylic copolymer thickener | 0.3 |
| Laponite RD (BYK Additives Division, ALTANA Group) | Inorganic pseudoplastic thickener | 0.1 |
| BYK 093 (BYK Additives, ALTANA Group) | Defoamer | 0.1 |
| BYK 349 (BYK Additives, ALTANA Group) | Wetting agent | 0.1 |
| Ammonium hydroxide | pH modifying agent | QS to reach pH >7 |

The infrared oven (14) temperature of approximately 110°C is sufficiently low to avoid crosslinking of the first polymer matrix coating layer, whilst still maintaining the ability to completely dry the reflective nanolayer. The chemical interconnection among the platelets which are in a partial overlapping configuration, as illustrated schematically in Figure 6, is provided by a condensation mechanism of a hydrolysed silane, for example Silquest Wetlink 78 (Momentive Performance Materials, Inc.), prediluted in water.

The yarn then entered the vessel containing the second polymer matrix primer layer formulation (15) as described in Table 1.3.

**Table 1.3: second polymer matrix primer layer formulation**

| **Name** | **Description/usage** | **Parts per hundred (phr)** |
|---|---|---|
| Water (deionized) | Diluent | 200 |
| Witcobond 737 (Baxenden Chem. LTD, Chemtura Group) | Polyurethane dispersion adhesive (solid content 40%) | 100 |
| Acusol 820 (DOW Europe GmbH) | Thickener | 4 |
| Trixene AQUA BI 201 (Baxendenx Chem. LTD, Chemtura Group) | Blocked Isocyanate Crosslinker | 3 |
| Gamma-glycidoxypropyltrimethoxysilane | Adhesion promoter | 1 |
| BYK 093 (BYK Additives, ALTANA Group) | Defoamer | 0.4 |
| BYK 349 (BYK Additives, ALTANA Group) | Wetting agent | 0.2 |
| Ammonium hydroxide (as 5% NH₃. solution in water) | pH modifying agent | QS to reach pH >7 |

The wet content applied to the yarn is calibrated by the same applicator system setup comprising a motorized rotary roller, groove or grooves, and press roller as described hereinbefore. In this particular case, the linear speed of the motorized rotary roller was 0.9 metres/min and the groove had a depth of 0.25 mm with an open angle of 60° measured from the groove's bottom, such that the wet content was approximately 7 to 8 microns thick around the yarn, sufficient to pull along refractive microparticles, with primary adhesion thereof to the second polymer matrix primer layer. The infrared oven located after the first polymer matrix bath vessel was turned off.

The yarn then entered the refractive microparticle distribution system (16) where a weak, primary, adhesion between the microparticles and the wet outer coat takes place. Particle size distribution of the refractive microparticles ranged from 50 to 60 microns, with a refractive index of 1.93.

The fully microparticle loaded yarn entered an infrared oven (17) set at 160°C where the second polymer matrix primer layer started to thin through water evaporation, to an approximate thickness of 1 micrometer. After a brief spell in the infrared oven, approximately 7 seconds, the fully microparticle loaded yarn is passed through a compression system (17) outside the infrared oven consisting of a gap roller to squeeze the microparticle layer, second polymer matrix primer layer, reflective layer and first polymer matrix layer, which was still in an "uncrosslinked", thermoplastic state around the core. The gap roller compression system consisted of two free rollers 40mm in diameter in contact with each other under 20 cN of applied pressure. The direction of movement of the yarn through the two rollers, along with the applied pressure of the rollers, caused compression of the microparticles, which were then partially embedded in the second polymer matrix primer layer. The rollers are preferably made of a flexible material to avoid breaking the microparticles. This compression system was located as close as possible to the exit of the infrared oven in order to reduce the time spent by the yarn outside the oven. It took less than 0.5 seconds for the fully microparticle laden yarn to leave the infrared oven, be squeezed in the compression system and return back inside the same infrared oven to continue to complete crosslinking of the various polymer matrix layers for a remaining 50s. This enabled the yarn to be maintained at the oven temperature of 160°C throughout this part of the process.

Part of the yarn obtained was then sized and wrapped on a spool (19), resulting in an "open lens" retroreflective yarn. The sizing step produced a dry content of first polymer matrix on the microparticle refractive surface well below 0.5 micrometers. At these thicknesses, which are smaller than optical wavelengths, there is no measurable effect on the final reflective behaviour of the product.

The remainder of the yarn entered another coating vessel filled with a two-component heat curable liquid silicone elastomer, of the type already indicated elsewhere in the present specification, which was cured by a polyaddition reaction. The silicone elastomer viscosity was approximately 2500 mPa.s at 23°C. An applicator system as described above for application of the first and second polymer matrix layers, was used, including a motorized rotary roller and a presser roller. In this case, the motorized rotary roller had a linear speed of 0.5 m/min and the groove had a depth of 0.5 mm with an open angle of 60° measured from the groove's bottom. The second roller was pressed on the motorized rotary roller at a pressure of 1 bar. The dosage system was configured such that the dry content surrounding the refractive microparticles was regular and, on average, approximately 8 microns thick. This process produced a "closed lens" retroreflective yarn.

In Table 1.4 the yarn's linear mass density, as well as the weight contribution of the substructure is reported for both yarns produced. The term "coatings" indicates the sum of the weight contributions of the polymers and any additives from the first and second polymer matrix layers, the first being overwhelmingly greater than the second, in approximately a 95% to 5% ratio.

**Tab. 1.4: linear mass density and weight contributions for Example 1.**

| Yarn Count | Ex.2a (open lens) | Ex.2b (closed lens) |
|---|---|---|
| Total (dTex) | 1000 +/- 100 | 1200 +/- 100 |
| Part by weight (%) | | |
| - PA₆₆ high tenacity yarn | 11 | 9.2 |
| - Coatings (of which Reflective nanolayer) | 9 (<0,02) 80 | 7.5 (<0,02) 66.7 |
| - 1.93 r.i. microbeads (50-60 microns) | - | 16.7 |
| - 2K silicone coating | | |
| Diameter (microns) | 265 +/- 20 | 283 +/- 25 |

As mentioned above, the reflective nanolayer is negligible in terms of contribution to the overall mass of the product, due to its positioning in a dedicated layer, mimicking metal PVD of microbeads as is customary for flat high-visibility retroreflectives.

Both the "open lens" and "closed lens" yarns can be woven or knit with no damage to the outer refractive microparticles. The yarns can be used alone or mixed with ordinary yarns in order to display patterns, drawings or enhance and/or modify the mechanical properties of the fabric. Embroidery is also possible with the yarns produced according to the invention. The touch and frictional properties are significantly different between an "open lens" yarn and a "closed lens" yarn, the latter, including those described herein, being wire-like.

All known reference methods for measuring retroreflectance are those used for fabrics. Current reference norms, developed for the high-visibility garment industry, are ANSI 107 and EN20471:2010, where the coefficient of retroreflection R_{A} (Commission Internationale de L'Eclairage in CIE 54.2:2001, "Retroreflection - Definitions and Measurements"), is used. To this end, the yarns were first converted into textiles, woven and/or knit, then subjected to R_{A} measurement. All measurements refer to a single pair of illumination (or entrance) and observation angles. To define the entrance angle, a surface and it's orientation must be defined for the sample. Clearly, in such measurement, the reflective surface is the fabric lying flat. As is customary, the chosen angular values are set to 5°,12' for the entrance and observation angles respectively. The fabric's structure is kept constant when comparing different yarns, i.e. the same warp/weft or curses/wales per cm number, for example.

Alternatively, a photometric measurement on the yarn itself can be carried out once the yarn has been tightly wrapped around a flat-spool, avoiding empty spaces, and this spool then used as a target sample.

The two yarns in Example 1 above were converted into a knitted fabric with a "gauge 7" i.e. 7 needles per 2.54 cm or 1 inch, circular knitting machine of 8.9 cm diameter and 77 needles in total. The resulting textile was a knitted fabric with 7 courses and 6 wales per cm.

Retroreflective measurements were performed and values given below in Table 1.5

**Table 1.5: Retroreflective properties from yarns in Example 1**

| R_{A} [5°,12'] (cd/lux/m²) | Ex.1a (open lens) | Ex.1b (closed lens) |
|---|---|---|
| As knitted fabric (courses: 7/cm, wales: 6/cm) | 50 ± 2 | 2 ± 2 |
| As bare yarn on flat-spool (tightly wrapped) | 76 ± 2 | 3 ± 2 |

Retroreflectivity for the "open lens" yarn Example 1a is high. In Example 1b, the value for the "closed lens" yarn is lower due to the presence of the third polymer matrix layer, but remarkably and surprisingly still present.

The knitted fabrics and yarns were water-washed at up to 60°C according to ISO 6330:2009 (2A) and the fabrics also dry cleaned at 30°C according to ISO 3175:2010 without any significant loss of refractive microparticles.

The decay of retroreflective power as a function of the number n of wash cycles, expressed as ratio R_{A},loss (n) = R_{A} (n cycles)) / R_{A} (0 cycles), is above 0,95, i.e. above 95% of the initial value, after 10 washes at 60°C, both as free yarn or knitted fabric, according to ISO6330:2009 (2A). Surprisingly, these decay profiles agree quite significantly with those obtained from current top-quality, high-visibility flat-coated retroreflective fabrics.

During weaving or knitting, yarns according to Example 2 exhibit a relatively low tendency to delaminate during fabric manufacturing. They also exhibit only a few failures when used for embroidery.

Higher retroreflection and mechanical stiffness are both the result of the layering structure of the products of Example 1. The dedicated reflector layering with higher ordering and nanometric thickness improves the product's photometric properties. Moreover, since the first polymer matrix layer is free from non-polymeric reflective species, crucial adhesion to the core PA66 yarn is higher, avoiding delamination, and increasing its cohesive properties with both the core and the second polymer matrix primer layer.

### Coloured Yarn Example 1

In a different embodiment of Example 1, a load of 15 parts per hundred of the blue pigment, C.I. P.Blue 15:3 with 46% dry content, was added only to the second polymer matrix primer layer formulation in Table 1.3. The yarn was manufactured exactly as for the "open lens" example above, before and after application of the second polymer matrix primer layer. Yarn linear mass density and diameter were unchanged. The weight fractions scale up appropriately in the second polymer matrix primer layer. Since the mass ratio between the primer layer and the first polymer matrix layer is around 5/95, pigment contribution is less than 0.5% in the coatings, and negligible in total. The yarn had an intense blue colour under diffuse illumination. R_{A} dropped down to 50 cd/lux/m2 for the yarn wrapped around a flat spool, which is 66 % of the value observed for the unpigmented yarn.

A careful positioning of the pigmented layer, in this case behind the refractive microparticles, and yet still above the reflective layer, maximizes aesthetic effect, leading to a high colour effect with minimum pigment yield and minimal drop in retroreflection. The result is in good agreement with similar results widely known for flat high-visibility coatings.

Multilayer "open lens" yarns are more retroreflective, tougher, and far more adaptable for producing highly effective colouring. The other big advantage of a multi-layering structure, namely the ability to prepare "closed lens" yarns with good photometric performance, is described in the following Example 2.

### EXAMPLE 2:

The PA66 110 dtex high-tenacity yarn was processed as for Example 1 until just before application of the second polymer matrix primer layer. The coated and dried yarn entered the vessel containing the second polymer matrix primer layer formulation as defined in Table 2.1.

**Table 2.1: second polymer matrix primer layer formulation for embedded microparticle retroreflective yarn**

| **Name** | **Description/usage** | **Parts per hundred (phr)** |
|---|---|---|
| Witcobond 737 (Baxenden Chem. LTD.) | Polyurethane dispersion adhesive (solid content 40%) | 100 |
| Water (Deionized) | Diluent | 20 |
| Trixene AQUA BI 201 | Blocked Isocyanate Crosslinker | 3 |
| Acusol 820 (DOW Europe GmbH) | Thickener | 0.5 |
| BYK 093 (BYK Additives, ALTANA Group) | Defoamer | 0.4 |
| BYK 349 (BYK Additives, ALTANA Group) | Wetting agent | 0.2 |
| Gamma-glycidoxypropyltrimethoxysilane | Adhesion promoter | 1 |
| Ammonium hydroxide (as 5% NH₃. solution in water) | pH modifying agent | Quantum sufficit for pH >7 |

The primer layer wet content on the yarn was calibrated via the same applicator system with motorized rotary roller and presser roller as described hereinbefore. In this case, the linear speed of the motorized rotary roller was still 0.9 metres/min, but the groove had a depth of 0.35 mm with an open angle of 60° measured from the groove's bottom. Wet content was approximately 12 to 15 microns thick around the yarn. The refractive index of this coating, once dried, was 1.51. Dilution was also rescaled with regard to Example 1 to give a final dry thickness of 8 ± 1 microns.

The coated yarn containing the first and second polymer matrices entered the microparticle distribution system containing 2.2 refractive index microparticles with a particle size distribution of from 53 to 63 microns, emerging from the vessel fully surrounded by microbeads weakly attached.

The product was then dried and compressed in the infrared oven exactly as for Example 1. The coated and bead bearing yarn entered a vessel containing the silicone elastomer formulation used in Example 1 to apply the third polymer matrix layer. The coated yarn was then collected on a spool after reticulation. In Table 2.2, the yarn linear mass density as well as the weight contribution of the substructure is reported for both the "open lens" and "closed lens" yarns.

**Table 2.2: linear mass density and weight contributions for Example 2.**

| Yarn Count | Ex.3a (open lens) | Ex.3b (closed lens) |
|---|---|---|
| Total (dTex) | 1050 +/- 100 | 1250 +/- 100 |
| Part by weight (%) | | |
| - PA₆₆ high tenacity yarn | 10.5 | 8.8 |
| - Coatings (of which Reflective species) | 9 (<0,02) 80.5 | 7.6 (<0,02) 67.6 |
| - 2.2 r.i. microbeads (53-63 microns) | - | 16 |
| - 2K silicone coating | | |
| Diameter (microns) | 270 +/- 25 | 290 +/- 30 |

As for previous Examples, the yarns were also converted into knitted fabrics. Retroreflective measurements were performed and results displayed in Table 2.3

**Table 2.3: Retroreflective properties from yarns in Example 2**

| R_{A} [5°,12'] (cd/lux/m²) | Ex.3a (open lens) | Ex.3b (closed lens) |
|---|---|---|
| As knitted fabric (courses: 7/cm, wales: 6/cm) | 1 ± 1 | 14 ± 2 |
| As bare yarn on flat-spool (tightly wrapped) | 1 ± 1 | 20 ± 2 |

Results were largely as expected. "Open lens" yarn with 2.2 refractive index microparticles had almost no R_{A}. On the other hand, fully embedded, "closed lens" yarns displayed determinable R_{A}, of several factors greater than in the examples with refractive microparticles having a refractive index of 1.93. The ratio of second polymer matrix primer layer thickness and microparticle average radius is 8/28, which is close to the optimized distance for the interspace between the rear side of the microparticle, as seen from the a viewer looking on from the outside, and the reflective layer.

## Claims

1. Retroreflective, elongated, filamentous product, comprising:
a core of non-metallic filamentous material;
a first polymer matrix layer comprising a polymer resin, located around an outer peripheral surface of, and-penetrating- into, the core of non-metallic filamentous- material;
a reflective material located on an outer peripheral surface of said first polymer matrix layer;
a second polymer matrix layer comprising a polymer resin, forming a primer layer on top of said reflective material; and
a plurality of refractive microparticles distributed in said second polymer matrix primer layer, wherein said plurality of refractive microparticles is partially embedded in said second polymer matrix primer layer.

2. Retroreflective, elongated, filamentous product according to claim 1, wherein said retroreflective elongated filamentous product is chosen from the group consisting of yarn, thread, and fibre.

3. Retroreflective, elongated, filamentous product according to claim 1 or claim 2, wherein the at least one non-metallic filamentous material is selected from the group consisting of natural non-metallic or synthetic non-metallic materials, preferably selected from the group consisting of polyamides, polyesters, polyethylenes, liquid crystal polymers, polyarylates, glass fibers, aramide fibers, and combinations thereof.

4. Retroreflective, elongated, filamentous product according to any one of the preceding claims, wherein the first polymer matrix layer is chosen from the group of polymers consisting of waterborne acrylic emulsions, polyurethane dispersions, solvent-borne polyurethanes, and combinations thereof.

5. Retroreflective, elongated, filamentous product according to any one of the preceding claims, wherein the first polymer matrix layer has an average thickness of from about 10 micrometers to about 40 micrometers, and preferably, is approximately 15 micrometers thick.

6. Retroreflective, elongated, filamentous product according to any one of the preceding claims, wherein the reflective material is chosen from the group consisting of reflective metals, metal oxides, metal alloys, non-metal oxides, reflective polymers, mica, boron nitride, nacreous pigment flakes, and combinations thereof.

7. Retroreflective, elongated, filamentous product according to any one of the preceding claims, wherein the reflective material consists of discrete particles of reflective material.

8. Retroreflective, elongated, filamentous product according one of the preceding claims, wherein the reflective material is a particulate material selected from the group consisting of flakes, platelets, needles, spheres, discs, granules, pressed-shape flakes, cornflake -shaped flakes, silver dollar shaped flakes, and combinations thereof.

9. Retroreflective, elongated, filamentous product according one of the preceding claims, wherein the reflective material comprises vacuum metallized pigment platelets having an average thickness of from about 0.03 micrometers to about 0.1 micrometers and a specific surface area of from about 50 square micrometers to about 300 square micrometers.

10. Retroreflective, elongated, filamentous product according to any one of the preceding claims, wherein the reflective material is arranged in a manner chosen from the group consisting of tightly packed multiple layers, adjacently deposited collections, and partially overlapping layers, of reflective material, and combinations thereof.

11. Retroreflective, elongated, filamentous product according to any one of the preceding claims, wherein the reflective particles are chemically interconnected to form a continuous layer of partially overlapping regions.

12. Retroreflective, elongated, filamentous product according to any one of the preceding claims, wherein the reflective particles are chemically interconnected via a binding agent chosen from the group consisting of organosilanes and titanates, and combinations thereof.

13. Retroreflective, elongated, filamentous product according to any one of the preceding claims, wherein the reflective layer has an average thickness of from about 0.05 micrometers to about 5 micrometers.

14. Retroreflective, elongated, filamentous product according to any one of the preceding claims, wherein the reflective layer has an average thickness of about 0.2 micrometers.

15. Retroreflective, elongated, filamentous product according to any one of the preceding claims, wherein the plurality of refractive microparticles have a refractive index of from about 1.3 to about 2.4.

16. Retroreflective, elongated, filamentous product according to any one of the-preceding claims, wherein the plurality of refractive microparticles are chosen from the group consisting of refractive microparticles having a spherical, substantially spherical, or prism shape, and combinations thereof.

17. Retroreflective, elongated, filamentous product according to any one of the preceding claims, wherein the plurality of refractive microparticles have an average particle thickness of from about 30 micrometers to about 120 micrometers.

18. Retroreflective, elongated, filamentous product according to any one of the preceding claims, wherein the plurality of refractive microparticles is partially embedded in the second polymer matrix primer layer up to a depth of between one quarter to one half of the average particle thickness of said microparticles.

19. Retroreflective, elongated, filamentous product according to any one of the preceding claims, wherein the plurality of refractive microparticles is partially embedded in the second polymer matrix primer layer as a monolayer of refractive microparticles.

20. Retroreflective, elongated, filamentous product according to any one of the preceding claims, wherein the second polymer matrix primer layer, has a thickness of between about an eighth and a half of the average particle thickness of said refractive microparticles.

21. Retroreflective, elongated, filamentous product according to any one of the preceding claims, wherein the second polymer matrix layer is a polymer selected from the group consisting of waterborne acrylic emulsions, polyurethane dispersions, solvent-borne polyurethanes, and combinations thereof.

22. Retroreflective, elongated, filamentous product according to any one of the preceding claims, wherein the refractive microparticles are covered completely by a third transparent or semi-opaque polymer matrix layer.

23. Retroreflective, elongated, filamentous product according to claim 22, wherein the refractive microparticles have a refractive index of from about 2.1 to about 2.3, and the third polymer matrix layer has a refractive index of from about 1.3 to about 1.7.

24. Retroreflective, elongated, filamentous product according to claim 22, wherein the third polymer matrix layer is chosen from the group of polymers consisting of hot-melt crosslinkable polyurethanes, solvent-borne or waterborne polyurethanes, acrylic emulsions, two-component curable silicone-based elastomers and combinations thereof.

25. Retroreflective, elongated, filamentous product according to any one of the preceding claims having a linear mass density of between about 800 dtex and about 1300 dtex, and preferably between about 900 dtex to about 1200 dtex.

26. Process for the manufacture of a retroreflective, elongated, filamentous product according to any one of claims 1 to 25, said process comprising the steps of:
providing a core material of non-metallic filamentous material;
impregnating an outer peripheral surface of the core of non-metallic filamentous material with a first polymer matrix layer comprising a polymer resin such that said first polymer matrix layer surrounds, and penetrates into, said core;
locating a reflective material around an outer peripheral surface of first polymer matrix layer;
locating a second polymer matrix layer comprising a polymer resin, on top of said reflective material, to form a primer layer; and
distributing a plurality of refractive microparticles in said second polymer matrix primer layer, wherein said plurality of refractive microparticles is partially embedded in said second polymer matrix primer layer.

27. Process according to claim 26, wherein the first polymer matrix layer is crosslinked such that during full solvent evaporation it is in a thermoplastic state, and then under curing conditions undergoes a thermoset conversion.

28. Process according to claim 26 or claim 27, wherein the locating of said reflective material occurs via depositing said reflective material on the outer peripheral surface of said first polymer matrix layer.

29. Process according to any one of preceding claims 26 to 28,wherein said reflective material is located around the peripheral surface of said first polymer matrix layer by applying an aqueous dispersion of reflective material to said peripheral surface of said first polymer matrix layer.

30. Process according to claim 29, wherein one or more binding agents is co-applied with the aqueous dispersion of reflective material.

31. Process according to any one of preceding claims 26 to 30, comprising the step of arranging said reflective material on said peripheral outer surface of said first polymer matrix layer in a manner chosen from the group consisting of tightly packed multiple layers, adjacently deposited collections, partially overlapping layers, of said reflective material, and combinations thereof.

32. Process according to any one of preceding claims 26 to 31, wherein the plurality of refractive microparticles is embedded into said second polymer matrix primer layer by application of heat and pressure when said first polymer matrix layer and said second polymer matrix primer layer are in a thermoplastic state.

33. Process according to preceding claim 32, wherein pressure is applied using a gapped roller system.

34. Use of a retroreflective, elongated, filamentous product according to any one of claims 1 to 25, or obtained by the process according to any one of claims 26 to 33, in the manufacture of a textile product.

35. Use according to claim 34, wherein the textile product is knitted.

36. Use according to claim 34, wherein the textile product is woven.

37. Use according to claim 34, wherein the textile product is non-woven.

38. Garment integrating a retroreflective, elongated, filamentous product according to any one of claims 1 to 25, or obtained by a process according to any one of claims 26 to 33.

## Patentansprüche

1. Retroreflektierendes längliches filamentöses Produkt, umfassend:
einen Kern aus nichtmetallischem filamentösem Material;
eine erste Polymerharz umfassende Polymermatrixschicht, die sich um eine äußere Umfangsfläche des Kerns aus nichtmetallischem filamentösem Material befindet und den Kern durchdringt;
ein reflektierendes Material, das sich auf einer äußeren Umfangsfläche der ersten Polymermatrixschicht befindet;
eine zweite Polymerharz umfassende Polymermatrixschicht, die eine Primärschicht auf dem reflektierenden Material ausbildet; und
eine Vielzahl von brechenden Mikropartikeln verteilt in dem zweiten Polymermatrixprimärschicht, wobei die Vielzahl von brechenden Mikropartikeln zum Teil in dem zweiten Polymermatrixprimärschicht eingebettet ist.

2. Retroreflektierendes längliches filamentöses Produkt nach Anspruch 1, wobei das retroreflektierende längliche filamentöse Produkt aus der Gruppe bestehend aus Garn, Faden und Fasern ausgewählt ist.

3. Retroreflektierendes längliches filamentöses Produkt nach Anspruch 1 oder Anspruch 2, wobei das mindestens ein nichtmetallische filamentöse Material aus der Gruppe bestehend aus natürlichen nichtmetallischen oder synthetischen nichtmetallischen Material, vorzugsweise aus der Gruppe bestehend aus Polyamiden, Polyestern, Polyethylenen, Flüssigkristallpolymeren, Polyarylaten, Glasfasern, Aramidfasern, und Kombinationen davon, ausgewählt ist.

4. Retroreflektierendes längliches filamentöses Produkt nach einem der vorhergehenden Ansprüche, wobei die erste Polymermatrixschicht aus der Gruppe bestehend aus Polymeren bestehend aus Acrylemulsionen auf Wasserbasis, Polyurethandispersionen, Polyurethanen auf Lösungsmittelbasis, und Kombinationen davon, ausgewählt ist.

5. Retroreflektierendes längliches filamentöses Produkt nach einem der vorhergehenden Ansprüche, wobei die erste Polymermatrixschicht eine durchschnittliche Dicke von etwa 10 Mikrometer bis etwa 40 Mikrometer, und vorzugsweise von etwa 15 Mikrometer, aufweist.

6. Retroreflektierendes längliches filamentöses Produkt nach einem der vorhergehenden Ansprüche, wobei das reflektierende Material aus der Gruppe bestehend aus reflektierenden Metallen, Metalloxiden, Metalllegierungen, Nichtmetalloxiden, reflektierenden Polymeren, Glimmer, Bornitrid, Perlglanzpigmentflocken, und Kombinationen davon, ausgewählt ist.

7. Retroreflektierendes längliches filamentöses Produkt nach einem der vorhergehenden Ansprüche, wobei das reflektierende Material aus diskreten Partikeln von reflektierendem Material besteht.

8. Retroreflektierendes längliches filamentöses Produkt nach einem der vorhergehenden Ansprüche, wobei das reflektierende Material ein teilchenförmiges Material aus der Gruppe bestehend aus Flocken, Plättchen, Nadeln, Kugeln, Scheiben, Körnern, gepressten Flocken, Cornflakes-förmigen Flocken, Silberdollar-förmigen Flocken, und Kombinationen davon, ausgewählt ist.

9. Retroreflektierendes längliches filamentöses Produkt nach einem der vorhergehenden Ansprüche, wobei das reflektierende Material vakuummetallisierten Pigmentplättchen umfasst, die eine durchschnittliche Dicke von etwa 0,03 Mikrometer bis etwa 0,1 Mikrometer, und eine spezifische Oberfläche von etwa 50 Quadratmikrometer bis etwa 300 Quadratmikrometer, aufweisen.

10. Retroreflektierendes längliches filamentöses Produkt nach einem der vorhergehenden Ansprüche, wobei das reflektierende Material auf eine Weise angeordnet ist, die aus der Gruppe bestehend aus dicht gepackten Multischichten, nebeneinander abgelagerten Ansammlungen, und teilweise überlappenden Schichten, von reflektierendem Material, und Kombinationen davon, ausgewählt ist.

11. Retroreflektierendes längliches filamentöses Produkt nach einem der vorhergehenden Ansprüche, wobei die reflektierenden Partikeln chemisch miteinander verbunden sind, um eine kontinuierliche Schicht von teilweise überlappenden Bereichen zu bilden.

12. Retroreflektierendes längliches filamentöses Produkt nach einem der vorhergehenden Ansprüche, wobei die reflektierenden Partikeln durch ein Bindemittel chemisch miteinander verbunden sind, das aus der Gruppe bestehend aus Organosilanen und Titanaten, und Kombinationen davon, ausgewählt ist.

13. Retroreflektierendes längliches filamentöses Produkt nach einem der vorhergehenden Ansprüche, wobei die reflektierende Schicht eine durchschnittliche Dicke von etwa 0,05 Mikrometer bis etwa 5 Mikrometer aufweist.

14. Retroreflektierendes längliches filamentöses Produkt nach einem der vorhergehenden Ansprüche, wobei die reflektierende Schicht eine durchschnittliche Dicke von etwa 0,2 Mikrometer aufweist.

15. Retroreflektierendes längliches filamentöses Produkt nach einem der vorhergehenden Ansprüche, wobei die Vielzahl von brechenden Mikropartikeln ein Brechungsindex von etwa 1,3 bis etwa 2,4 aufweist.

16. Retroreflektierendes längliches filamentöses Produkt nach einem der vorhergehenden Ansprüche, wobei die Vielzahl von brechenden Mikropartikeln aus der Gruppe bestehend aus brechenden Mikropartikeln ausgewählt ist, wobei diese kugelförmig, im Wesentlichen kugelförmig, oder prismenförmig, und Kombinationen davon, sind.

17. Retroreflektierendes längliches filamentöses Produkt nach einem der vorhergehenden Ansprüche, wobei die Vielzahl von brechenden Mikropartikeln eine durchschnittliche Partikeldicke von etwa 30 Mikrometer bis etwa 120 Mikrometer.

18. Retroreflektierendes längliches filamentöses Produkt nach einem der vorhergehenden Ansprüche, wobei die Vielzahl von brechenden Mikropartikeln teilweise in der zweiten Polymermatrixprimärschicht bis auf eine Tiefe von einem Viertel bis auf die Hälfte der durchschnittlichen Partikeldicke des Mikropartikeln eingebettet ist.

19. Retroreflektierendes längliches filamentöses Produkt nach einem der vorhergehenden Ansprüche, wobei die Vielzahl von brechenden Mikropartikeln teilweise in der zweiten Polymermatrixprimärschicht als Monoschicht von brechenden Mikropartikeln.

20. Retroreflektierendes längliches filamentöses Produkt nach einem der vorhergehenden Ansprüche, wobei die zweite Polymermatrixprimärschicht eine Dicke von etwa einem Achtel bis auf die Hälfte der durchschnittlichen Partikeldicke der brechenden Mikropartikeln aufweist.

21. Retroreflektierendes längliches filamentöses Produkt nach einem der vorhergehenden Ansprüche, wobei die zweite Polymermatrixschicht ein Polymer ist, das aus der Gruppe bestehend aus Acrylemulsionen auf Wasserbasis, Polyurethandispersionen, Polyurethanen auf Lösungsmittelbasis, und Kombinationen davon, ausgewählt ist.

22. Retroreflektierendes längliches filamentöses Produkt nach einem der vorhergehenden Ansprüche, wobei die brechenden Mikropartikeln total durch eine dritte transparente oder halbopake Polymermatrixschicht bedeckt sind.

23. Retroreflektierendes längliches filamentöses Produkt nach Anspruch 22, wobei die brechenden Mikropartikeln ein Brechungsindex von etwa 2,1 bis etwa 2,3 aufweisen, und die dritte Polymermatrixschicht ein Brechungsindex von etwa 1,3 bis etwa 1,7 aufweist.

24. Retroreflektierendes längliches filamentöses Produkt nach Anspruch 22, wobei die dritte Polymermatrixschicht aus der Gruppe von Polymer bestehend aus heiß-schmelzenden vernetzbaren Polyurethanen, Polyurethanen auf Lösungsmittelbasis oder auf Wasserbasis, Acrylemulsionen, aushärtbaren Zweikomponentensilikon-basierenden Elastomeren und Kombinationen davon, ausgewählt ist.

25. Retroreflektierendes längliches filamentöses Produkt nach einem der vorhergehenden Ansprüche, welches eine lineare Dichte von etwa 800 dtex bis etwa 1300 dtex, und vorzugsweise von etwa 900 dtex bis etwa 1200 dtex aufweist.

26. Verfahren zur Herstellung eines retroreflektierenden länglichen filamentösen Produkts nach einem der vorhergehenden Ansprüche 1 bis 25, umfassend folgende Schritten:
Bereitstellung eines Kernmaterial aus nichtmetallischem filamentösem Material;
Imprägnierung einer äußeren Umfangsfläche des Kernmaterials aus nichtmetallischem filamentösem Material mit einer ersten, Polymerharz umfassenden, Polymermatrixschicht, in dem die erste Polymermatrixschicht umhüllt, und durchdringt, das Kern;
Anordnung eines reflektierenden Materials um eine äußere Umfangsfläche der ersten Polymermatrixschicht;
Anordnung einer zweiten, Polymerharz umfassenden, Polymermatrixschicht, auf das reflektierende Material, um eine Primärschicht zu bilden; und
Verteilung einer Vielzahl von brechenden Mikropartikeln in der zweiten Polymermatrixprimärschicht, wobei die Vielzahl von brechenden Mikropartikeln zum Teil in dem zweiten Polymermatrixprimärschicht eingebettet ist.

27. Verfahren nach Anspruch 26, wobei die erste Polymermatrixschicht so vernetzt wird, dass während der kompletten Lösungsmittelverdampfung, diese Schicht sich im thermoplastischen Zustand befindet, und danach unter Härtungsbedingungen eine Wärmehärtungsumwandlung erfährt.

28. Verfahren nach Anspruch 26 oder Anspruch 27, wobei die Anordnung des reflektierenden Materials durch eine Ablagerung des reflektierenden Materials auf der äußeren Umfangsfläche der ersten Polymermatrixschicht.

29. Verfahren nach einem der vorhergehenden Ansprüche 26 bis 28, wobei das reflektierende Material sich dadurch um die Umfangsfläche der ersten Polymermatrixschicht befindet, dass eine Wasserdispersion aus reflektierendem Material auf die Umfangsfläche der ersten Polymermatrixschicht angebracht wird.

30. Verfahren nach Anspruch 29, wobei ein oder mehrere Bindungsmittel gleichzeitig mit der Wasserdispersion aus reflektierendem Material angebracht wird (werden).

31. Verfahren nach einem der vorhergehenden Ansprüche 26 bis 30, umfassend den Schritt der Anordnung des reflektierenden Materials auf der äußeren Umfangsfläche der ersten Polymermatrixschicht auf eine Weise, welche aus der Gruppe bestehend aus dicht gepackten Multischichten, nebeneinander abgelagerten Ansammlungen, und teilweise überlappenden Schichten, von reflektierendem Material, und Kombinationen davon, ausgewählt ist.

32. Verfahren nach einem der vorhergehenden Ansprüche 26 bis 31, wobei die Vielzahl von brechenden Mikropartikeln durch Anwendung von Wärme und Druck in die zweite Polymermatrixprimärschicht eingebettet wird, wenn die erste Polymermatrixschicht und die zweite Polymermatrixschicht sich im thermoplastischen Zustand befinden.

33. Verfahren nach Anspruch 32, wobei Druck durch ein Spaltwalzensystem angewendet wird.

34. Verwendung eines retroreflektierenden länglichen filamentösen Produkts nach einem der vorhergehenden Ansprüche 1 bis 25, oder hergestellt durch ein Verfahren nach einem der vorhergehenden Ansprüche 26 bis 33, zur Herstellung eines Textilproduktes.

35. Verwendung nach Anspruch 34, wobei das Textilprodukt gestrichen ist.

36. Verwendung nach Anspruch 34, wobei das Textilprodukt gewebt ist.

37. Verwendung nach Anspruch 34, wobei das Textilprodukt ungewebt ist.

38. Kleidungsstück beinhaltend ein retroreflektierendes längliches filamentöses Produkt nach einem der vorhergehenden Ansprüche 1 bis 25, oder hergestellt durch ein Verfahren nach einem der vorhergehenden Ansprüche 26 bis 33.

## Revendications

1. Produit filamenteux allongé rétro-réfléchissant, comprenant:
une âme en matériau non-métallique filamenteux;
une première couche de réseau polymère comprenant une résine polymère, située autour d'une surface extérieure périphérique de, et pénétrant, l'âme en matériau non-métallique filamenteux;
un matériau réfléchissant situé sur une surface extérieure périphérique de ladite première couche de réseau polymère;
une deuxième couche de réseau polymère comprenant une résine polymère, formant une couche d'apprêt sur ledit matériau réfléchissant; et
une pluralité de microparticules réfractrices distribuées dans ladite deuxième couche de réseau polymère d'apprêt, selon lequel ladite pluralité de microparticules réfractrices est partiellement intégrée dans ladite deuxième couche de réseau polymère d'apprêt.

2. Produit filamenteux allongé rétro-réfléchissant selon la revendication 1, selon lequel ledit produit filamenteux allongé rétro-réfléchissant est choisi dans le groupe consistant en du fil, du filament, et des fibres.

3. Produit filamenteux allongé rétro-réfléchissant selon la revendication 1, ou la revendication 2, selon lequel le au moins un matériau non-métallique filamenteux est choisi dans le groupe consistant en les matériaux non-métalliques naturels ou synthétiques, de préférence choisis dans le groupe consistant en les polyamides, les polyesters, les polyéthylènes, les polymères de cristaux liquides, les polyarylates, les fibres de verre, les fibres d'aramide, et des combinaisons de ceux-ci.

4. Produit filamenteux allongé rétro-réfléchissant selon l'une quelconque des revendications précédentes, selon lequel la première couche de réseau polymère est choisie dans le groupe consistant en les polymères consistant en les émulsions acryliques portées par l'eau, les dispersions de polyuréthane, les polyuréthanes portés par solvant, et des combinaisons de ceux-ci.

5. Produit filamenteux allongé rétro-réfléchissant selon l'une quelconque des revendications précédentes, selon lequel la première couche de réseau polymère présente une épaisseur moyenne de l'ordre d'environ 10 micromètres à environ 40 micromètres, et de préférence, présente une épaisseur de 15 micromètres approximativement.

6. Produit filamenteux allongé rétro-réfléchissant selon l'une quelconque des revendications précédentes, selon lequel le matériau réfléchissant est choisi dans le groupe consistant en les métaux, les oxydes de métaux, les alliages de métaux, et les oxydes non-métalliques, réfléchissants, les polymères réfléchissants, le mica, le nitrure de bore, les flocons de pigment nacrés, et des combinaisons de ceux-ci.

7. Produit filamenteux allongé rétro-réfléchissant selon l'une quelconque des revendications précédentes, selon lequel le matériau réfléchissant consiste en des particules discrètes de matériau réfléchissant.

8. Produit filamenteux allongé rétro-réfléchissant selon l'une quelconque des revendications précédentes, selon lequel le matériau réfléchissant est un matériau particulaire choisi dans le groupe consistant en des flocons, des plaquettes, des aiguilles, des sphères, des disques, des granules, des flocons formés par compression, des flocons en forme de cornflake, des flocons en forme de dollar argenté, et des combinaisons de ceux-ci.

9. Produit filamenteux allongé rétro-réfléchissant selon l'une quelconque des revendications précédentes, selon lequel le matériau réfléchissant comprend des plaquettes de pigment métallisées sous vide présentant une épaisseur moyenne de l'ordre d'environ 0,03 micromètres à environ 0,1 micromètres et une surface spécifique de l'ordre d'environ 50 micromètres carrés à environ 300 micromètres carrés.

10. Produit filamenteux allongé rétro-réfléchissant selon l'une quelconque des revendications précédentes, selon lequel le matériau réfléchissant est disposé selon une organisation choisie dans le groupe consistant en des couches multiples à haute densité, des collections à dépôt adjacent, et des couches partiellement superposées, de matériau réfléchissant et des combinaisons de celles-ci.

11. Produit filamenteux allongé rétro-réfléchissant selon l'une quelconque des revendications précédentes, selon lequel les particules réfléchissantes sont reliées entre elles chimiquement afin de former une couche continue de régions se superposant partiellement.

12. Produit filamenteux allongé rétro-réfléchissant selon l'une quelconque des revendications précédentes, selon lequel les particules réfléchissantes sont reliées entre elles chimiquement via un agent de liaison choisi dans le groupe consistant en des organosilanes et des titanates, et des combinaisons de ceux-ci.

13. Produit filamenteux allongé rétro-réfléchissant selon l'une quelconque des revendications précédentes, selon lequel la couche réfléchissante présente une épaisseur moyenne de l'ordre d'environ 0,05 micromètres à environ 5 micromètres.

14. Produit filamenteux allongé rétro-réfléchissant selon l'une quelconque des revendications précédentes, selon lequel la couche réfléchissante présente une épaisseur moyenne d'environ 0,2 micromètres.

15. Produit filamenteux allongé rétro-réfléchissant selon l'une quelconque des revendications précédentes, selon lequel la pluralité de microparticules réfractrices présente un index de réfraction de l'ordre d'environ 1,3 à environ 2,4.

16. Produit filamenteux allongé rétro-réfléchissant selon l'une quelconque des revendications précédentes, selon lequel la pluralité de microparticules réfractrices est choisie dans le groupe consistant en des microparticules réfractrices présentant une forme sphérique, sensiblement sphérique, ou prismatique, et des combinaisons de celles-ci.

17. Produit filamenteux allongé rétro-réfléchissant selon l'une quelconque des revendications précédentes, selon lequel la pluralité de microparticules réfractrices présente une épaisseur moyenne de particule de l'ordre d'environ 30 micromètres à environ 120 micromètres.

18. Produit filamenteux allongé rétro-réfléchissant selon l'une quelconque des revendications précédentes, selon lequel la pluralité de microparticules réfractrices est partiellement intégrée dans la deuxième couche de réseau polymère d'apprêt jusqu'à une profondeur entre un quart à une demie de l'épaisseur moyenne de particule des dites microparticules.

19. Produit filamenteux allongé rétro-réfléchissant selon l'une quelconque des revendications précédentes, selon lequel la pluralité de microparticules réfractrices est partiellement intégrée dans la deuxième couche de réseau polymère d'apprêt sous forme de monocouche de microparticules réfractrices.

20. Produit filamenteux allongé rétro-réfléchissant selon l'une quelconque des revendications précédentes, selon lequel la deuxième couche de réseau polymère d'apprêt présente une épaisseur de l'ordre d'environ une huitième et une demie de l'épaisseur moyenne de particule des dites microparticules réfractrices.

21. Produit filamenteux allongé rétro-réfléchissant selon l'une quelconque des revendications précédentes, selon lequel la deuxième couche de réseau polymère est un polymère choisi dans le groupe consistant en en les émulsions acryliques portées par l'eau, les dispersions de polyuréthane, les polyuréthanes portés par solvant, et des combinaisons de ceux-ci.

22. Produit filamenteux allongé rétro-réfléchissant selon l'une quelconque des revendications précédentes, selon lequel les microparticules réfractrices sont recouvertes complètement par une troisième couche transparente ou semi-opaque de réseau polymère.

23. Produit filamenteux allongé rétro-réfléchissant selon l'une quelconque des revendications précédentes, selon lequel les microparticules réfractrices présentent un index de réfraction de l'ordre d'environ 2,1 à environ 2,3, et la troisième couche de réseau polymère présente un index de réfraction de l'ordre d'environ 1,3 à environ 1,7.

24. Produit filamenteux allongé rétro-réfléchissant selon la revendication 22, selon lequel la troisième couche de réseau polymère est choisie dans le groupe consistant en le groupe de polymères consistant en des polyuréthanes à réticulation thermofusible, des polyuréthanes portes par solvant ou par l'eau, des émulsions acryliques, des élastomères bicomposants durcissables à base de silicone et des composants de ceux-ci.

25. Produit filamenteux allongé rétro-réfléchissant selon l'une quelconque des revendications précédentes, présentant une masse linéaire entre environ 800 dtex et environ 1300 dtex, et de préférence entre environ 900 dtex à environ 1200 dtex.

26. Procédé de fabrication d'un produit filamenteux allongé rétro-réfléchissant selon l'une quelconque des revendications 1 à 25, ledit procédé comprenant les étapes de:
fourniture d'un matériau d'âme en matériau filamenteux non-métallique;
imprégnation d'une surface extérieure périphérique de l'âme en matériau filamenteux non-métallique avec une première couche de réseau polymère comprenant une résine polymère de telle sorte que ladite première couche de réseau polymère entoure, et pénètre, ladite âme;
disposition d'un matériau réfléchissant autour d'une surface périphérique extérieure de la première couche de réseau polymère;
disposition d'une deuxième couche de réseau polymère comprenant une résine polymère, sur ledit matériau réfléchissant, afin de former une couche d'apprêt; et
distribution d'une pluralité de microparticules réfractrices dans ladite deuxième couche de réseau polymère d'apprêt, selon lequel ladite pluralité de microparticules réfractrices est partiellement intégrée dans ladite deuxième couche de réseau polymère d'apprêt.

27. Procédé selon la revendication 26, selon lequel la première couche de réseau polymère est réticulée de telle sorte que pendant l'évaporation complète du solvant elle se trouve dans un état thermoplastique, et que sous conditions de cuisson subit une conversion thermodurcissable.

28. Procédé selon la revendication 26 ou la revendication 27, selon lequel la disposition dudit matériau réfléchissant s'effectue via le dépôt dudit matériau réfléchissant sur la surface extérieure périphérique de ladite première couche de réseau polymère.

29. Procédé selon l'une quelconque des revendications 26 à 28 précédentes, selon lequel ledit matériau réfléchissant est disposé autour de la surface périphérique de ladite première couche de réseau polymère par application d'une dispersion aqueuse de matériau réfléchissant à ladite surface périphérique de ladite première couche de réseau polymère.

30. Procédé selon la revendication 29, selon lequel un ou plusieurs agents de liaison est (sont) co-applique(s) avec la dispersion aqueuse de matériau réfléchissant.

31. Procédé selon l'une quelconque des revendications 26 à 30 précédentes, comprenant l'étape de disposition dudit matériau réfléchissant sur ladite surface périphérique de ladite première couche de réseau polymère selon une organisation choisie dans le groupe consistant en des couches multiples à haute densité, des collections à dépôt adjacent, et des couches partiellement superposées, dudit matériau réfléchissant et des combinaisons de celles-ci.

32. Procédé selon l'une quelconque des revendications 26 à 31 précédentes, selon lequel la pluralité de microparticules réfractrices est intégrée dans ladite deuxième couche de réseau polymère d'apprêt par application de chaleur et de pression lorsque ladite première couche de réseau polymère et ladite deuxième couche de réseau polymère d'apprêt sont à l'état thermoplastique.

33. Procédé selon la revendication 32, selon lequel la pression est appliquée via un système de rouleaux à pincement.

34. Utilisation d'un produit filamenteux allongé rétro-réfléchissant selon l'une quelconque des revendications 1 à 25, ou obtenu par le procédé selon l'une quelconque des revendications 26 à 33, pour la fabrication d'un produit textile.

35. Utilisation selon la revendication 34, selon laquelle le produit textile est tricoté.

36. Utilisation selon la revendication 34, selon lequel le produit textile est tissé.

37. Utilisation selon la revendication 34, selon laquelle le produit textile est non-tissé.

38. Article vestimentaire intégrant un produit filamenteux allongé rétro-réfléchissant selon l'une quelconque des revendications 1 à 25, ou obtenu par le procédé selon l'une quelconque des revendications 26 à 33.
